Europäisches Patentamt

European Patent Office

Office européen des brevets

(19)

(11) Veröffentlichungsnummer : **0 166 083**
**B1**

(12) **EUROPÄISCHE PATENTSCHRIFT**

(45) Veröffentlichungstag der Patentschrift :
04.05.88

(21) Anmeldenummer : 85103429.8

(22) Anmeldetag : 22.03.85

(51) Int. Cl.⁴ : **F 16 B   7/00**

(54) **Verbinder für Haupt- und Sprossenprofile eines Fensters, einer Tür, einer Fassade oder einer Überdachung.**

(30) Priorität : 30.05.84 DE 3420205

(43) Veröffentlichungstag der Anmeldung :
02.01.86 Patentblatt 86/01

(45) Bekanntmachung des Hinweises auf die Patenterteilung : 04.05.88 Patentblatt 88/18

(84) Benannte Vertragsstaaten :
AT CH DE FR GB IT LI NL SE

(56) Entgegenhaltungen :
EP-A- 0 094 300
AT-B-   342 927
CH-A-   451 603
DE-A- 2 026 946
DE-A- 3 148 823
FR-A- 2 094 231
FR-A- 2 141 012
US-A- 3 955 702

(73) Patentinhaber : SCHÜCO International GmbH & Co.
Karolinenstrasse 1-15
D-4800 Bielefeld 1 (DE)

(72) Erfinder : Steege, Hans-Dieter
Grüner Sand 9
D-4902 Bad Salzuflen 5 (DE)

(74) Vertreter : Stracke, Alexander, Dipl.-Ing. et al
Patentanwälte Dipl.-Ing. Loesenbeck Dipl.-Ing.
Stracke Jöllenbecker Strasse 164 Postfach 5605
D-4800 Bielefeld 1 (DE)

## Beschreibung

Die Erfindung bezieht sich auf einen T-Verbinder für als Hohlprofile ausgebildete Haupt- und Sprossenprofile für Fenster, Türen, Fassaden und Überdachungen, mit einem am Hauptprofil festlegbaren, sich durch die Verbindungsfläche in eine Innenkammer des Sprossenprofils erstreckenden Lagerteil, an dem ein in der Innenkammer des Sprossenprofils angeordnetes, am Sprossenprofil befestigbares Verbinderteil drehbar gelagert ist.

Es ist ein T-Verbinder dieser Art bekannt (EP-A-94 300), dessen Lagerteil mittels einer Schraube in einer Verankerungsnut eines Hauptprofils festgelegt ist. Dieses Lagerteil erstreckt sich über die Verbindungsfläche zwischen dem Hauptprofil und dem Sprossenprofil hinaus und weist eine Aufnahmebohrung für einen Gelenkbolzen auf, der die Schwenkachse des angelenkten Verbinderteils bildet, das in der Innenkammer des Sprossenprofil festgelegt ist. Die Mittelachse des Verbinderteils bildet mit der Verbindungsfläche des Hauptprofils einen Schnittpunkt, dessen Lage sich bei der Wahl unterschiedlicher Winkel zwischen dem Sprossenprofil und dem Hauptprofil ändert. Bei der bekannten T-Verbindung ist somit kein Bezugspunkt für das Sprossenprofil und für das Verbinderteil in der Verbindungsfläche zwischen dem Sprossenprofil und dem Hauptprofil vorhanden, der für alle Winkellagen des Sprossenprofils verbleibt, so daß die Projektierung eines Sprossenwerks unter Verwendung des T-Verbinders und auch die Montage eines Sprossenwerks Schwierigkeiten bereitet.

Der Erfindung liegt die Aufgabe zugrunde, einen T-Verbinder der eingangs genannten Art so zu gestalten, daß das Wandern des Schnittpunktes zwischen der Mittelachse des Verbinderteils und der durch das Hauptprofil gegebenen Verbindungsfläche bei unterschiedlichen Winkellagen des Sprossenprofils unterbleibt und damit eine einfache Montageposition für das Verbinderteil hergestellt wird.

Diese Aufgabe wird nach der Erfindung dadurch gelöst, daß die Drehachse des T-Verbinders in der Ebene der Verbindungsfläche vorgesehen, das Lagerteil mit einer kreisbogenförmigen Führungsbahn für das Verbinderteil ausgerüstet ist und die Drehachse des Verbinderteils in der Schnittlinie zwischen der Ebene der Verbindungsfläche und der Längsmittelebene des Verbinderteils liegt.

Hierdurch erhält das Verbinderteil innerhalb des Sprossenprofils unabhängig vom Anschlußwinkel zum Hauptprofil immer die gleiche definierte Lage, so daß der Einsatz von Fertigungsschablonen für die Befestigungsmittel zwischen dem Verbinderteil und dem Sprossenprofil gewährleistet ist.

Ausführungsbeispiele der Erfindung sind in den Zeichnungen dargestellt und werden im folgenden beschrieben.

Es zeigen :

Fig. 1 ein Hauptprofil und ein Sprossenprofil, bei denen der Anschlußwinkel des Sprossenprofils 90° beträgt,

Fig. 2 eine Verbindung zwischen einem Sprossenprofil und einem Hauptprofil mit einem von 90° abweichenden Anschlußwinkel,

Fig. 3 ein Hauptprofil mit zugeordnetem, verstellbarem Verbinder,

Fig. 4 einen Schnitt nach der Linie IV-IV in Fig. 3,

Fig. 5 eine Abwandlungsform zu der Ausführung nach der Fig. 4,

Fig. 6 ein weiteres Ausführungsbeispiel eines verstellbaren Sprossenverbinders,

Fig. 7 einen Schnitt nach der Linie VII-VII in Fig. 6,

Fig. 8 ein weiteres Ausführungsbeispiel eines verstellbaren Sprossenverbinders, dessen Lagerteil an einem Hauptprofil festgelegt ist, und

Fig. 9 einen Schnitt nach der Linie IX-IX in Fig. 8.

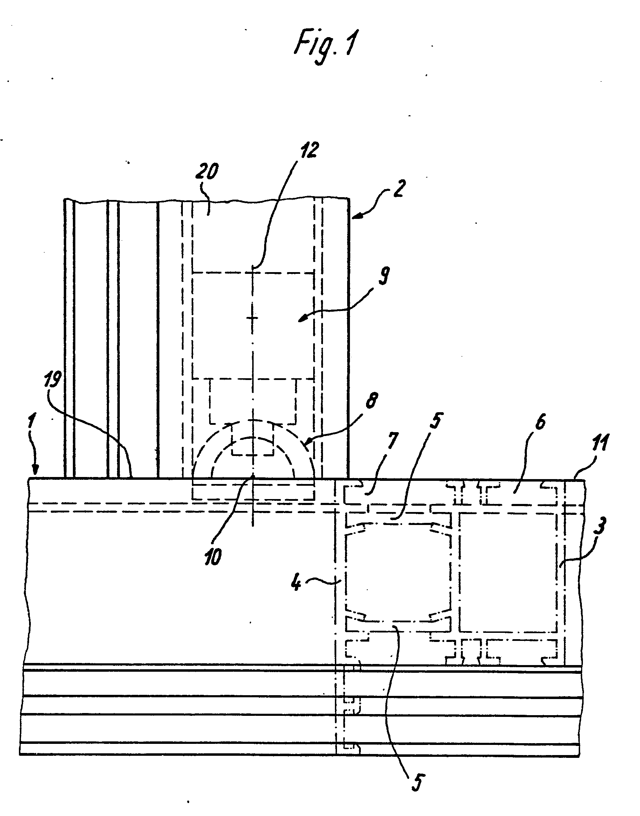

In der Fig. 1 ist eine T-Verbindung zwischen einem Hauptprofil 1 und einem Sprossenprofil 2 dargestellt, bei der beide Profile als Hohlprofile ausgebildet sind und eine wärmegedämmte Ausführung aufweisen.

Aus der Darstellung des Hauptprofils 1 ergibt sich auch der Querschnitt des Hauptprofils, das aus einem der Rauminnenseite oder der Gebäudeseite zugewandten Metallprofil 3, einem an der Außenseite vorgesehenen Metallprofil 4 und aus zwei aus Kunststoff gefertigten Isolierleisten 5 besteht, über die die Metallprofile 3 und 4 untereinander verbunden sind. Das Metallprofil 3 ist mit einer C-förmig begrenzten Verankerungsnut 6 ausgerüstet, während im Verbundbereich des Hauptprofils eine weitere C-förmig begrenzte Verankerungsnut 7 vorgesehen ist.

Der verstellbare Verbinder weist ein am Hauptprofil 1 festlegbares Lagerteil 8 und ein am Sprossenprofil 2 festlegbares Verbinderteil 9 auf.

Das Verbinderteil 9 ist gegenüber dem Lagerteil 8 um eine Drehachse 10 bewegbar, die in der Ebene der Verbindungsfläche zwischen dem Hauptprofil 1 und dem Sprossenprofil 2 liegt. Diese Verbindungsfläche wird durch die Begrenzungskanten 11 des Hauptprofils 1 bestimmt. Die Drehachse 10 liegt ferner in der Längsmittelebene 12 des Verbinderteils 9, und zwar in der Schnittlinie dieser Ebene, mit der Ebene der Verbindungsfläche. Das Lagerteil ist mit einer Fußplatte 13 ausgerüstet, die in die C-förmig begrenzte Verankerungsnut 6 eingeführt wird und die Randstege 14, 15 der Verankerungsnut untergreift. Die Festlegung der Fußplatte 13 erfolgt mittels einer Druckschraube 16, die in einer Gewindebohrung 17 des Lagerteils eingeschraubt wird und sich mit ihrem unteren Ende am Nutboden 18 abstützt.

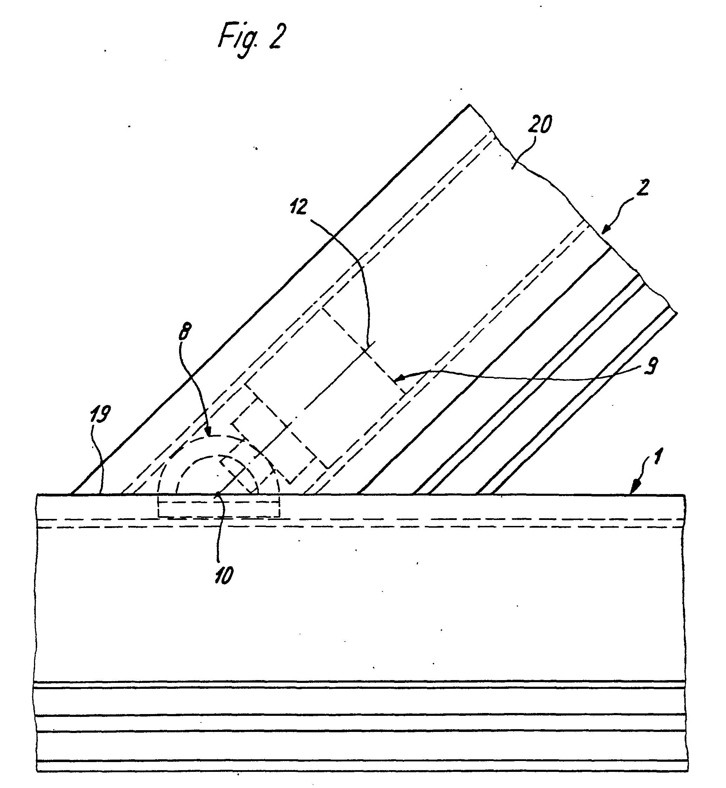

Aus den Fig. 1 und 2 ergibt sich, daß sich das Lagerteil über die Verbindungsfläche 19 zwischen dem Sprossenprofil und dem Hauptprofil hinaus erstreckt und in eine Innenkammer 20 des Sprossenprofils ragt, in der auch das Verbinderteil 9 angeordnet ist.

Das Lagerteil 8 weist an der dem Verbinderteil 9 zugewandten Seite eine kreisbogenförmig verlaufende Begrenzungsflache 21 auf.

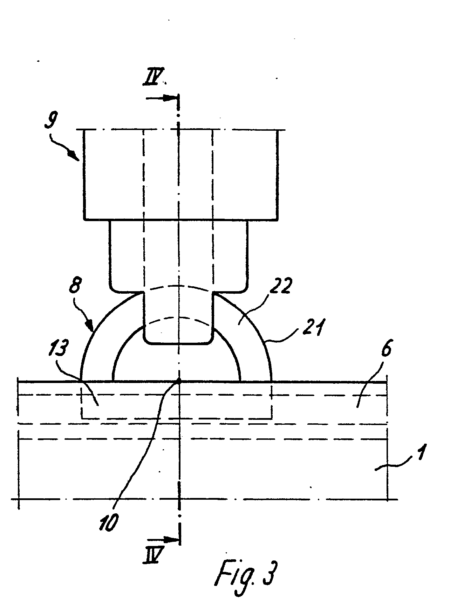

Bei den Ausfuhrungsbeispielen nach den Fig. 3 bis 6 stützt sich das Verbinderteil 9 an der kreisbogenförmig verlaufenden Begrenzungsfläche 21 ab.

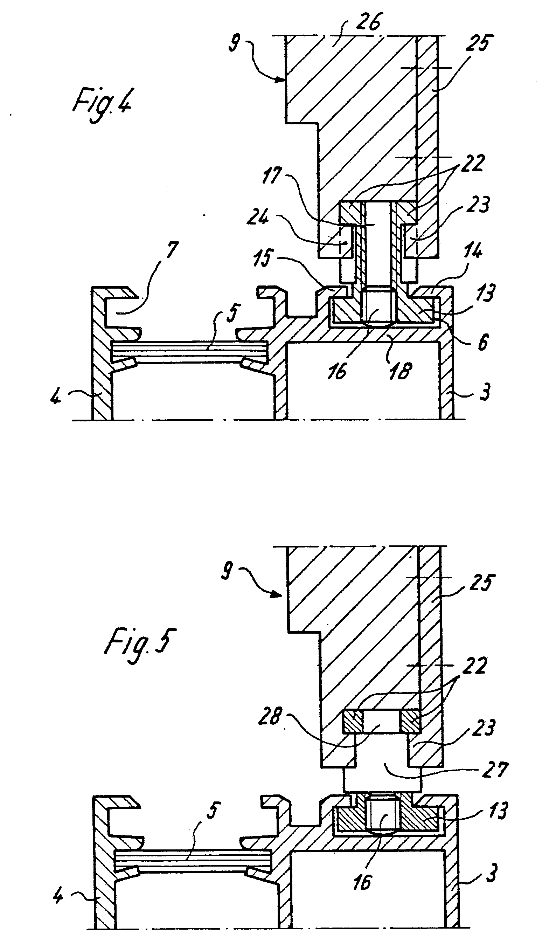

Bei dem Ausführungsbeispiel nach der Fig. 4 weist das Lagerteil 8 benachbart der Begrenzungsfläche 21 vorgesehene, entsprechend kreisbogenförmig verlaufende, nach außen vorspringende Fuhrungsleisten 22 auf. Diese Führungsleisten 22 werden von Nocken 23, 24 des Verbinderteils 9 untergriffen. Der Nocken 23 ist mit einer Lasche 25 einstückig, die mit dem Verbinderkorper 26 verschraubt wird. Der Nocken 24 ist mit dem Verbinderkörper 26 einstückig.

Die Gewindebohrung 17 für die Druckschraube 16 erstreckt sich über die gesamte Höhe des Lagerteils 8.

Bei der Ausführungsform nach der Fig. 5 ist das Lagerteil zwischen den kreisförmig verlaufenden Führungsleisten 22 und der Fußplatte 13 mit einer kreissegmentförmigen Durchbrechung 27 versehen. Im Bereich der Führungsleisten 22 ist eine Montagebohrung 28 für die Druckschraube 16 angeordnet. Die Gewindebohrung für die Druckschraube 16 beschränkt sich bei dieser Ausführungsform auf den Bereich der Fußplatte 13.

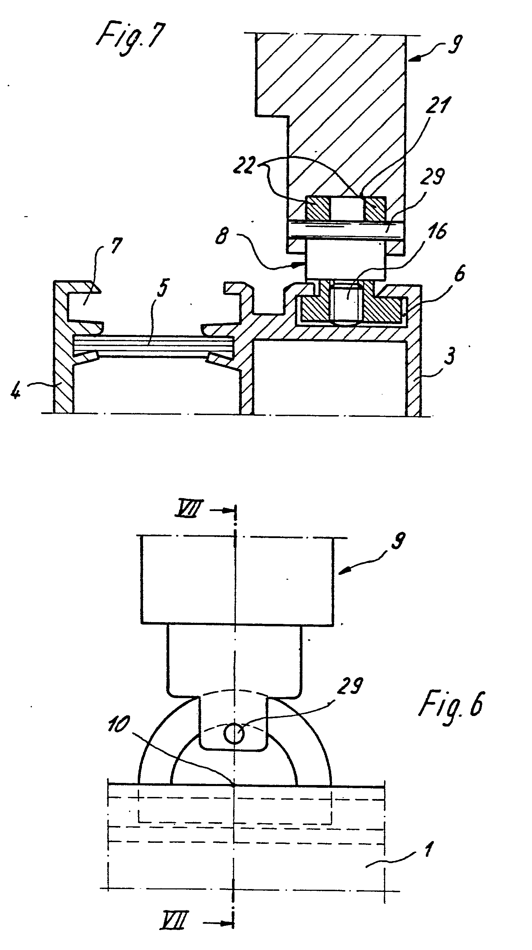

Bei dem Ausführungsbeispiel nach den Fig. 6 und 7 ist das Verbinderteil 9 mit einem Querbolzen 29 ausgerüstet, der die Führungsleisten 22 untergreift. Da sich das Verbinderteil 9 an der kreisbogenförmigen Begrenzungsfläche 21 des Lagerteils 9 abstützt, wird durch den Querbolzen 29 eine Zwangsführung des Verbinderteils 9 an den Führungsleisten 22 erreicht.

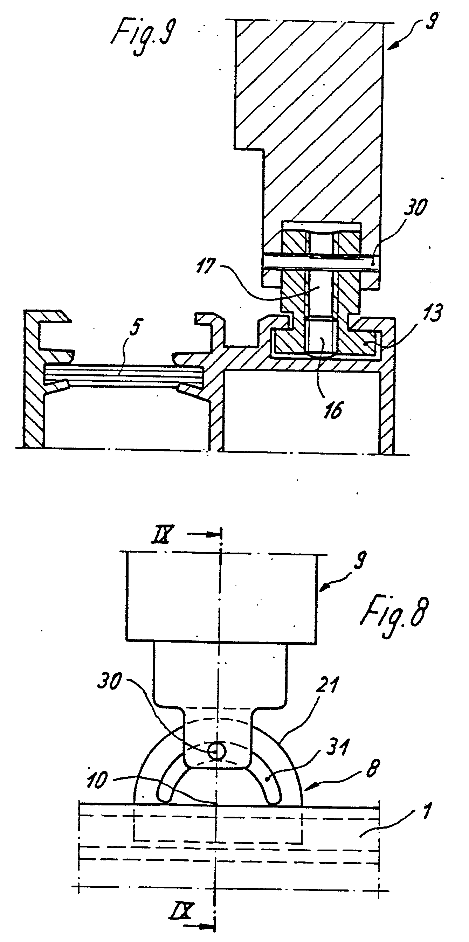

Bei dem Ausführungsbeispiel nach den Fig. 8 und 9 ist das an dem Sprossenprofil 2 festlegbare Verbinderteil 9 ebenfalls mit einem Querbolzen 30 ausgerüstet, jedoch erstreckt sich dieser Querbolzen durch eine halbkreisförmige Führungsnut 31 des Lagerteils 8. Bei dieser Ausführung entfällt eine Abstützung des Verbinderteils 9 an der dem Verbinderteil zugewandten kreisbogenförmigen Begrenzungsfläche 21 des Lagerteils 8.

Bezugszeichen

1 Hauptprofil
2 Sprossenprofil
3 Metallprofil
4 Metallprofil
5 Isolierleiste
6 Verankerungsnut
7 Verankerungsnut
8 Lagerteil
9 Verbinderteil
10 Drehachse
11 Begrenzungskante
12 Längsmittelebene
13 Fußplatte
14 Randsteg
15 Randsteg
16 Druckschraube
17 Gewindebohrung
18 Nutboden
19 Verbindungsfläche
20 Innenkammer
21 Begrenzungsfläche
22 Führungsleiste
23 Nocken
24 Nocken
25 Lasche
26 Verbinderkörper
27 Durchbrechung
28 Montagebohrung
29 Querbolzen
30 Querbolzen
31 Führungsnut

**Patentansprüche**

1. T-Verbinder für als Hohlprofile ausgebildete Haupt- und Sprossenprofile für Fenster, Türen, Fassaden und Überdachungen, mit einem am Hauptprofil (1) festlegbaren, sich durch die Verbindungsfläche (19) in eine Innenkammer (20) des Sprossenprofils (2) erstreckenden Lagerteil (8), an dem ein in der Innenkammer (20) des Sprossenprofils angeordnetes, am Sprossenprofil befestigbares Verbinderteil (9) drehbar gelagert ist, dadurch gekennzeichnet, daß die Drehachse (10) in der Ebene der Verbindungsflache (19) vorgesehen, das Lagerteil (8) mit einer kreisbogenförmigen Führungsbahn für das Verbinderteil (9) ausgerüstet ist und die Drehachse (10) des Verbinderteils (9) in der Schnittlinie zwischen der Ebene der Verbindungsfläche (19) und der Längsmittelebene (12) des Verbinderteils (9) liegt.

2. T-Verbinder nach Anspruch 1, dadurch gekennzeichnet, daß das Lagerteil (8) mit einer in eine C-förmig begrenzte Verankerungsnut (6) einführbaren und mittels einer sich am Nutboden (18) abstützenden Druckschraube (16) festlegbaren Fußplatte (13) versehen ist, und an der der Fußplatte (13) gegenüber liegenden Seite eine über einen Winkelbereich von 180° kreisbogenförmig verlaufende Begrenzungsfläche (21) aufweist.

3. T-Verbinder nach Anspruch 2, dadurch gekennzeichnet, daß das Verbinderteil (9) sich an der Begrenzungsfläche (21) abstützt.

4. T-Verbinder nach Anspruch 3, dadurch gekennzeichnet, daß benachbart der Begrenzungsfläche (21) entsprechend kreisbogenförmig verlaufende, nach außen vorspringende Fuhrungsleisten (22) vorgesehen sind, die von Nocken (23, 24) des Verbinderteils (9) untergriffen werden.

5. T-Verbinder nach Anspruch 2, dadurch gekennzeichnet, daß das Lagerteil (8) eine sich über die gesamte Höhe oder über die Höhe der Fußplatte (13) erstreckende Gewindebohrung für die Druckschraube (16) aufweist.

6. T-Verbinder nach Anspruch 4, dadurch gekennzeichnet, daß das Lagerteil (8) zwischen den kreisbogenförmig verlaufenden Führungsleisten (22) und der Fußplatte (13) eine kreissegmentförmige Durchbrechung (27) aufweist.

7. T-Verbinder nach Anspruch 4, dadurch gekennzeichnet, daß das Verbinderteil (9) eine mit einem Nocken (23) versehene Lasche (25) aufweist, die mit dem Verbinderkörper (26) verschraubt ist.

8. T-Verbinder nach Anspruch 4, dadurch gekennzeichnet, daß das Verbinderteil (9) mit einem die Führungsleisten (22) untergreifenden Querbolzen (29) ausgestattet ist.

9. T-Verbinder nach Anspruch 1, dadurch gekennzeichnet, daß das Lagerteil (8) eine halbkreisförmige Führungsnut (31) aufweist und ein Querbolzen (30) des Verbinderteils (9) sich durch die Führungsnut (31) des Lagerteils erstreckt.

10. T-Verbinder nach Anspruch 1 für Haupt- und Sprossenprofile in warmegedämmter Ausführung, bestehend aus zwei Metallprofilen, die über eine oder mehrere aus Kunststoff gefertigte Isolierleisten verbunden sind und im Verbundbereich und in dem an der Rauminnenseite oder an der Gebäudeseite liegenden Metallprofil C-förmig begrenzte Verankerungsnuten aufweisen, dadurch gekennzeichnet, daß die Fußplatte (13) des Lagerteils (8) in der Verankerungsnut (6) des zur Rauminnenseite oder zur Gebäudeseite liegenden Metallprofils (3) befestigt ist.

## Claims

1. A T-connector for main and crossbar members, which are in the form of hollow members, for windows, doors, facade structures and roofing structures, comprising a mounting portion (8) which can be fixed to the main member (1) and which extends through the connecting surface (19) into an internal chamber (20) in the crossbar member (2) and on which there is rotatably mounted a connector portion (9) which is arranged in the internal chamber (20) of the crossbar member and which can be secured to the crossbar member, characterised in that the axis of rotation (10) is disposed in the plane of the connecting surface (19) the mounting portion (8) is provided with an arcuate guide path for the connector portion (9), and the axis of rotation (10) of the connector portion (9) is disposed on the line of intersection between the plane of the connecting surface (19) and the longitudinal central plane (12) of the connector portion (9).

2. A T-connector according to claim 1 characterised in that the mounting portion (8) is provided with a base plate (13) which can be introduced into an anchoring groove (6) defined by a C-shape and can be fixed in position by means of a pressure screw (16) which bears against the bottom (18) of the groove, and, at the side which is in opposite relationship to the base plate (13), the mounting portion (8) has a boundary surface (21) which extends in an arcuate configuration over an angular range of 180°.

3. A T-connector according to claim 2 characterised in that the connector portion (9) bears against the boundary surface (21).

4. A T-connector according to claim 3 characterised in that disposed adjacent the boundary surface (21) are correspondingly arcuately extending, outwardly projecting guide bars (22), under which engage projections (23, 24) on the connector portion (9).

5. A T-connector according to claim 2 characterised in that the mounting portion (8) has a screwthreaded bore for the pressure screw (16), said bore extending over the entire height or over the height of the base plate (13).

6. A T-connector according to claim 4 characterised in that the mounting portion (8) has a through opening (27) in the form of a segment of a circle, between the arcuately extending guide bars (22) and the base plate (13).

7. A T-connector according to claim 4 characterised in that the connector portion (9) has a plate (25) which is provided with a projection (23) and which is screwed to the connector body (26).

8. A T-connector according to claim 4 characterised in that the connector portion (9) is provided with a transverse pin (29) which engages under the guide bars (22).

9. A T-connector according to claim 1 characterised in that the mounting portion (8) has a semicircular guide slot (31) and a transverse pin (30) of the connector portion (9) extends through the guide slot (31) in the mounting portion.

10. A T-connector according to claim 1 for main and crossbar members of a heat-insulated construction, comprising two metal members which are connected by way of one or more insulating bars made of plastics material and which have anchoring grooves which are defined in a C-shape, in the connecting region and in the metal member which is disposed at the inward room side or at the building side, characterised in that the base plate (13) of the mounting portion (8) is secured in the anchoring groove (6) in the metal member (3) which is at the inward room side or the building side.

## Revendications

1. Raccord en T pour profilés principaux et profilés de croisillons, réalisés sous la forme de profilés creux et destinés à des fenêtres, des portes. des façades ou des toits, avec une partie de montage (8) fixable sur le profilé principal (1), s'étendant par la face de raccordement (19) dans une chambre intérieure (20) du profilé de croisillon (2), et sur laquelle est montée rotative une partie de raccordement (9) disposée dans la chambre intérieure (20) du profilé de croisillon et fixable sur le profilé de croisillon, caractérisé en ce que l'axe de rotation (10) est prévu dans le plan de la face de raccordement (19), la partie de montage (8) est munie d'une glissière de guidage en arc de cercle pour la partie de raccordement (9), et l'axe de rotation (10) de la partie de raccordement (9) se situe sur la ligne d'intersection entre le plan de la face de raccordement (19) et le plan médian longitudinal (12) de la partie de raccordement (9).

2. Raccord en T selon la revendication 1, caractérisé en ce que la partie de montage (8) est munie d'une plaque de base (13) qui peut être introduite dans une rainure d'ancrage (6) délimitée en forme de C et fixée au moyen d'une vis de pression (16) s'appuyant sur le fond (18) de la rainure, et présente sur le côté opposé à la plaque de base (13) une face de délimitation (21) s'étendant en arc de cercle sur une plage angulaire de 180°.

3. Raccord en T selon la revendication 2, caractérisé en ce que la partie de raccordement (9) s'appuie contre la face de délimitation (21).

4. Raccord en T selon la revendication 3, caractérisé en ce que des barrettes de guidage (22) faisant saillie vers l'extérieur et s'étendant en arc de cercle d'une manière correspondante sont prévues au voisinage de la face de délimitation (21), barrettes en dessous desquelles s'engagent des ergots (23, 24) de la partie de raccordement (9).

5. Raccord en T selon la revendication 2, caractérisé en ce que la partie de montage (8) présente un alésage fileté pour la vis de pression (16), lequel s'étend sur toute la hauteur ou au-delà de la hauteur de la plaque de base (13).

6. Raccord en T selon la revendication 4, caractérisé en ce que la partie de montage (8) présente une interruption en forme de segment de cercle (27) entre les barrettes de guidage en arc de cercle (22) et la plaque de base (13).

7. Raccord en T selon la revendication 4, caractérisé en ce que la partie de raccordement (9) présente une patte (25) munie d'un ergot (23), laquelle est vissée sur le corps (26) du raccord.

8. Raccord en T selon la revendication 4, caractérisé en ce que la partie de raccordement (9) est munie d'un boulon transversal (29) s'engageant en dessous des barrettes de guidage (22).

9. Raccord en T selon la revendication 1, caractérisé en ce que la partie de montage (8) présente une rainure de guidage (31) en forme de demi-cercle, et un boulon transversal (30) de la partie de raccordement (9) s'étend à travers la rainure de guidage (31) de la partie de montage.

10. Raccord en T selon la revendication 1 pour des profilés principaux et de croisillons en exécution calorifugée, constitué de deux profilés métalliques qui sont mutuellement assemblés par une ou plusieurs barrettes isolantes en matière plastique, et qui présentent, dans la région d'assemblage et dans le profilé métallique situé du côté intérieur de la pièce ou du côté du bâtiment, des rainures d'ancrage délimitées en forme de C, caractérisé en ce que la plaque de base (13) de la partie de montage (8) est fixée dans la rainure d'ancrage (6) du profilé métallique (3) situé du côté intérieur de la pièce ou du côté du bâtiment.

# Fig.1

## Fig. 2

IV

9

8

22

21

13

6

1

10

IV

Fig. 3

3

Fig. 4

Fig. 5

Fig.7

22

21

29

9

7

8

16

5

6

4

3

VII

9

29

10

Fig. 6

1

VII

0 166 083

Fig.9

30

17

5

13

16

IX

9

30

21

31

10

8

Fig.8

1

IX

6